# EUROPEAN PATENT SPECIFICATION

(11) **EP 3 412 156 B1**
(45) Date of publication and mention of the grant of the patent: **29.07.2020**
(21) Application number: 18174078.8
(22) Date of filing: 24.05.2018
(51) Int. Cl.: A23L 25/00, A23L 11/00

(54) **PROCESSING SEEDS INTO A PASTE-LIKE FOOD PRODUCT**
VERARBEITUNG VON SAMEN IN EIN PASTENARTIGES LEBENSMITTELPRODUKT
TRAITEMENT DE GRAINES DANS UN PRODUIT ALIMENTAIRE EN PÂTE

(30) Priority: 05.06.2017 EP 17174453
(43) Date of publication of application: 12.12.2018
(73) Proprietor: Tetra Laval Holdings & Finance S.A., 1009 Pully (CH)
(72) Inventor: MORTENSEN, Hans Henrik, DK-9400 Noerresundby (DK); JENSEN, Jan Fauerholt, 9300 Sæby (DK); FRØRUP, Søren, 8462 Harlev J (DK); KOLLERUP, Jensen Per, 9700 Broendeslev (DK)
(74) Representative: Tetra Pak - Patent Attorneys SE

(56) References cited:
- WO-A1-2012/138582
- US-A1- 2011 003 047
- Anonymous: "Tetra Pak High Shear Mixer - Batch unit for viscous products", http://www.tetrapak.com, 12 April 2017 (2017-04-12), pages 1-5, XP055388578, Retrieved from the Internet: URL:https://web.archive.org/web/2017041213 2744/http://www.tetrapak.com/processing/mi xing/tetra-pak-high-shear-mixer-batch [retrieved on 2017-07-06]

## Description

### Technical Field

The invention relates to a method for processing seeds into a paste-like food product in one single mixer unit.

### Background

Paste-like food products that are made of seeds have been consumed by humans for a long time. The products include various kinds of pastes, spreads, sauces and dips that have a base of one or more varieties of seeds that have been cooked (heated) and thereafter mixed into a paste. Other ingredients such as salt, different spices and herbs, sugar, water, dairy products and vegetable oil are, according to the recipe for producing the paste-like food product, often mixed with the seeds to form the paste-like food product.

Some commonly known types of paste-like food products are hummus and different kinds of bean pastes and dips. Examples of seeds are different varieties of peas and beans, such as chickpeas, black peas, black-eyed peas, black beans, kidney beans, pinto beans, lentils and soybeans.

When processing the seeds into paste-like food products, complicated and slow processes are commonly used. Many process steps are performed, each typically requiring separate and dedicated process equipment. For example, when producing bean paste the dry beans are first washed in a dedicated washing arrangement in order to remove dirt and impurities from the beans. Next the beans are soaked in water for several hours in order to soften them so that cooking time can be reduced. The soaked beans are thereafter cooked (heated) to further soften them. Depending on the type of bean, the cooking also destroys Lectin type toxins that may be present in the bean. After the cooking, the beans are moved to a mixer where the beans are mixed into a paste. If other ingredients shall be included in the finished product they are typically introduced in the same mixer and mixed with the beans into the finished paste-like food product (e.g. a bean dip or bean paste).

Some techniques related to processing seeds are described in patent documents WO2012/138582A1 and US2011/003047A1.

Processing dry beans into bean paste is thus a complicated process that takes a long time and requires a number of machines, and is thereby both expensive and time consuming. This is true also for other seeds that need to be heated and mixed so that they can form the base of a paste-like food product.

### Summary

It is an object of the invention to at least partly overcome one or more of the above-identified limitations of the prior art. In particular, it is an object to provide a more efficient method for producing paste-like food products from seeds that need to be both heated and mixed in order to form part of the paste-like food products.

To solve these objects a method for processing seeds into a paste-like food product in one single mixer unit is provided. The method comprises: providing the seeds into the mixer unit, adding liquid to the seeds, heating the seeds to a predetermined temperature to thereby soften the seeds, and mixing the seeds into a paste to thereby obtain the paste-like food product. The seeds comprise less than 30 wt% water when provided into the mixer unit. The added liquid has a temperature of at least 60 °C, such that the heating is least partially provided by the added liquid.

Washing may be done outside the mixer unit. However, the heating and the mixing is done in the same apparatus, i.e. in the mixer unit, which makes the process much more efficient compared to the industry standard of today where multiple pieces of equipment are utilized for the heating and the mixing. The provided method allows for simpler installation and lower costs. Time for storage and transport may be reduced and less cleaning has to be performed. Another advantage with the method is that it facilitates mixing of the seeds into pieces before the heating and the liquid has fully softened the seeds, which further reduces the time for processing seeds into a paste-like food product.

Still other objectives, features, aspects and advantages of the invention will appear from the following detailed description as well as from the drawings.

### Drawings

Embodiments of the invention will now be described, by way of example, with reference to the accompanying schematic drawings, in which
Fig. 1 is a schematic view of a single mixer unit for processing seeds into a paste-like food product, and
Fig. 2 is a flow-chart of a method for processing seeds into a paste-like food product.

### Detailed Description

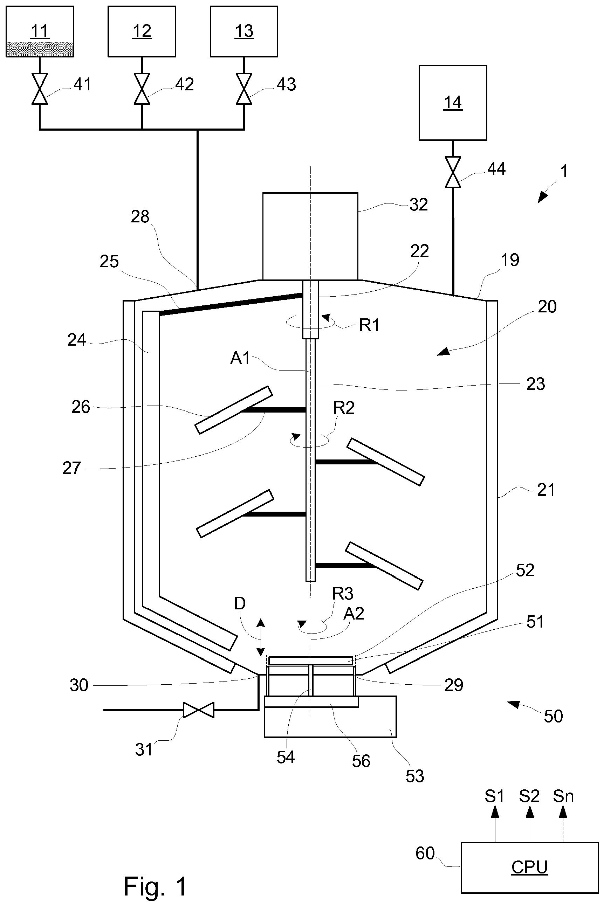

With reference to Fig. 1 a mixer unit 1 is illustrated. The mixer unit 1 comprises a tank 19 that has an inlet 28 for receiving various ingredients, such as seeds 11, liquid 12 and various other species and ingredients that, when properly mixed, form a paste-like food product. A number of sources that hold the ingredients that shall form the paste-like food product are connected to the inlet 28 via valves 41-43 that control the supply of the ingredients through the inlet 28 and into the tank 19. The mixer unit 1 has at its bottom 29 an outlet 30 through which a paste-like food product may leave the tank 19, for example by opening an outlet valve 31. One or more pumps may be arranged for feeding the ingredients 11, 12, 13 into the tank 19 respectively for drawing out paste-like food product from the tank 19.

A heating jacket 21 surrounds a periphery of the tank 19 and has an inlet respectively an outlet (not shown) for allowing a heating media to flow through the heating jacket 21 to thereby heat ingredients that are present inside the tank 19. A steam injector 14 is connected to supply steam into the mixer unit 1. The supply of steam is controlled via a valve 44. When steam is supplied into the mixer unit 1, then liquid is added to any seeds that are located inside the mixer unit 1 (since the steam eventually condensate) while simultaneously heating the seeds due to the relatively high temperature of the steam.

A double shaft agitator 20 is located inside the mixer unit 1 and has a double shaft axle 22, 23 that is suspended from the top of the tank 19. The double shaft axle has a first axle 22 that encloses an upper part of a second axle 23, and the two axles 22, 23 are driven to rotate in same or different directions R1, R2 by a motor unit 32 that is arranged at the top of the mixer unit 1. The two axles 22, 23 extend along and are rotatable about a first rotational axis A1 of the mixer unit 1.

A fist blade 24 is via an arm 25 connected to the first axle 22 so that the first blade 24 rotates in the same direction R1 as the first axle 22 when driven by the motor unit 32. The first blade 24 may be a scraper blade that rotates close to an inner wall of the tank 19, so that any ingredients that stick to the inner tank wall may be scraped off.

A second blade 26 is via an arm 27 connected to the second axle 23 so that the second blade 26 rotates in the same direction R2 as the second axle 23 when driven by the motor unit 32. The second blade 26 may be a lifting blade in the sense that it is arranged to make ingredients in contact with the second blade 26 flow upward from the bottom 29 of the tank 19, in a direction towards the top of the tank 19, when the second axle 23 is driven by the motor unit 32. Any suitable numbers of fluid lifting blades like the second blade 26 may be connected to the second axle 23, such as four blades, as shown in the illustrated example.

A rotor 51 is arranged at the bottom 29 of the tank 19. The rotor 51 is via an axle 54 connected to a rotor engine 53 that, when activated, drives the axle 54 so that the rotor 51 rotates in a rotational direction R3. The axle 54 of the rotor 51 extends along and is rotatable about a second rotational axis A2 of the mixer unit 1. The two axes A1 and A2 are preferably aligned with each other. A stator 52 is arranged around the radial periphery of the rotor 51. An actuator 56 is arranged to move the stator 52 in a direction D that is parallel to the axis of rotation A2 of the rotor 51. The actuator 56 can set the stator 52 in a lowermost position where it surrounds the radial periphery (circumference) of the rotor 51. The stator 52 can then, by the actuator 56, be moved to an uppermost position where it is lifted such that it does not surround the radial periphery of the rotor 51. The stator 52 has openings where it surrounds the circumference of the rotor 51, thereby allowing ingredients to be pushed through the stator when the stator 52 in an a position where it surrounds all of or some of the rotor 51.

The rotor 51, the stator 52 and the actuator 56 form a rotor-stator arrangement 50 that allows a shear that ingredients are subjected to, by the rotor 51 and the stator 52, to be varied when the rotor 51 rotates. In detail, when the stator 52 is in its lowermost position (closest to the bottom 29 of the tank 19), ingredients inside the tank 19 are by the rotation of the rotor 51 drawn towards the upper side of the rotor 51. The ingredients are then forced outwards in a radial direction of the rotor 51, through the holes in the stator 52 that surround the circumference of the rotor 51.

When the stator 52 is in its uppermost position (farthest away from the bottom 29 of the tank 19), ingredients inside the tank 19 are by the rotation of the rotor 51 drawn towards the upper side of the rotor 51. The ingredients are still forced outwards in a radial direction of the rotor 51, but without passing through the holes in the stator 52 since the stator 52 does not surround the circumference of the rotor 51. The stator 52 can be positioned at any location between its lowermost position and its uppermost position, which will vary the amount of ingredients that pass through the stator 52. The more ingredients that pass though the stator 52, the higher the shear will be. Thus, due to the actuator 56 and the movable stator 52 it is possible to vary a shear that is provided by the rotor 51 and the stator 52 during mixing of any ingredient inside the mixer unit 1. The provided shear may also be varied by changing the rotational speed of the rotor 51. This is independent of the position of the stator 52, where a higher rotational speed provides a higher shear.

A control unit 60 is configured to generate signals S1, S2, Sn to control the operation of the mixer unit 1. Some examples of controls signals include signals for opening and closing the valves 41-44 and 31 to thereby let in ingredients, steam and for emptying the mixer unit 1. Other signals control the rotation of any of the axles 22, 23 and 54 to thereby control agitation and shear applied on ingredients inside the mixer unit 1, while another signal controls the actuator 56 and thereby the shear that is applied on ingredients in dependence of the location of the stator 52.

The control unit 60 may comprise a CPU (central processing unit) and an MMI (Man Machine Interface), which are configured so that the mixer unit 1 may be controlled and so that information may be presented to an operator or user about the operation of the mixer unit 1. The MMI may, e.g., comprise one or more of a display, a touch screen, a mouse, a keyboard, a track pad, buttons, sliders, switches and knobs, allowing data and control instructions to be inputted by the operator.

The control unit 60 may be implemented by hardware components, or a combination of hardware components and software instructions. The software instructions may be executed by a processor in conjunction with an electronic memory in the control unit 60. The software instructions may be supplied to the control unit 60 on a computer-readable medium, which may be a tangible (non-transitory) product (e.g. magnetic medium, optical disk, read-only memory, flash memory, etc.) or a propagating signal. In one embodiment, the control unit 60 is a PLC. It should understood that the control unit 60 may also be configured to control other functions of the mixer unit 1 than those described herein. In combination, the mixer unit 1 and the control unit 60 are configured to, i.e. are operable to, perform the method for producing a paste-like food product as described below.

The described mixer unit 1 is one example of a single mixer unit that may be used for performing a method for processing seeds into a paste-like food product. Another example of a single mixer unit that may be used for performing the method is the mixer unit sold by Tetra Pak® under the name "Tetra Pak® High Shear Mixer".

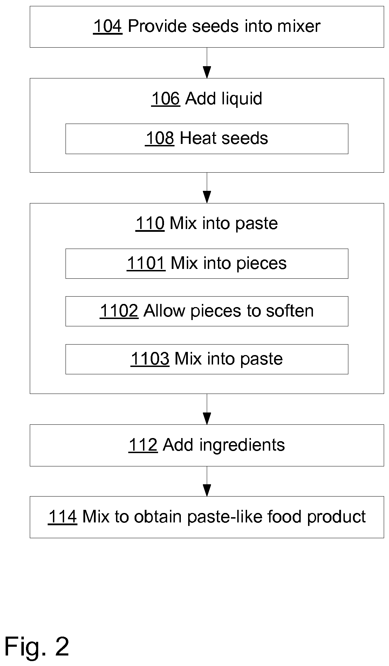

With refence to Fig. 2 the method for processing seeds into a paste-like food product in one single mixer unit is described. A typical prior art method would need at least one machine for heating (boiling) the seeds and one machine for mixing the seeds into a paste-like food product. Moreover, in the prior art the seeds are generally soaked for several hours, which takes significant time.

The described method only needs one single mixer unit 1 to accomplish the same paste-like products from seeds as prior art methods where multiple machines, vessels and tanks are needed. The seeds 11 are generally washed before being used in the described method.

The method comprises providing 104 the seeds 11 into the mixer unit 1. The seeds 11 may be provided into the mixer unit 1 via the inlet 28 by opening valve 41. Alternatively, the seeds are provided by opening a hatch (not shown) at the top of the tank 19 and by manually pouring the seeds into the mixer unit 1. The provided seeds often have the same temperature as the surroundings.

Liquid 12 is added 106 to the seeds. The added liquid 12 may have a weight that is at least 20%, or at least 50%, or at least 100%, of the weight of the seeds 11 that were provided 104 into the mixer unit 1. This means that so called dry-cooking of the seeds is not performed. When the seeds are beans, the weight of the added liquid may typically be up to about 150% of the weight of the seeds, since beans absorb nearly 1,5 times their dry weight. The added 106 liquid 12 has a temperature of at least 60 °C, such that the heating 108 is least partially provided by the added liquid 12.

The liquid is typically water. The added liquid may be warm, and is in one embodiment steam that is injected into the mixer unit 1. The steam condensates so that any gas or vapour phase of the steam turns into liquid, so that liquid thereby is added to the seeds.

When the added liquid is warm, as when steam is injected in the mixer unit 1, another step of the method is simultaneously accomplished, which is a step of heating 108 the seeds. The heating 108 of the seeds occurs since energy in form of heat is transferred from the steam to the seeds inside the mixer unit 1. The heating 108 comprises heating the seeds to a temperature within the range of 60 to 120 °C. The seeds may be held within this temperature range of 60 to 120 °C for less than 20 minutes, which is a significantly shorter time in comparison with conventional methods. In other embodiments the heating 108 comprises holding the seeds within the temperature range of 60 to 120 °C for less than 14 minutes, or less than 11 minutes. In some embodiments the temperature range may be 70 to 110 °C, or 80 to 100 °C, for less than 14 minutes or for less than 11 minutes.

When thee seeds are e.g. beans that, when raw, contain a harmful toxin, lectin-type substances, then the heating 108 should heat the seeds until these substances are removed to such an extent that the paste-like food product becomes safe for consumption by humans. The paste-like food product is safe when it can be consumed by humans without causing any harm, and when various food regulations in respect of lectin-type substances are fulfilled. Exactly at which temperature and for how long time the beans shall have this temperature in order to remove harmful toxin, lectin-type substances depends on the variety of the bean. Suitable temperatures and times may be empirically determined by analysing the content of the toxin, lectin-type substances for a product that is obtained at the temperature and time in question. Tests have shown that the method described herein very successfully removes such toxins, even though the cooking time is significantly shorter than in conventional cooking methods.

Liquid may be added in another way than by injecting steam, such as being directly introduced into the mixer unit 1 in liquid form at room temperature. The heating of the seeds could then be accomplished by supplying warm heating media through the heating jacket 21, to thereby heat both the seeds and the liquid inside the mixer unit 1. In this embodiment the adding of liquid and the heating of seeds are performed sequentially, while the former example in which steam was added accomplishes the adding of liquid and the heating of the seeds in one operation. In either case, the heating is controlled and the seeds are heated to a predetermined temperature that in combination with the added liquid soften the seeds. Exactly to which temperature the seeds should be heated to in order to obtain a desired softening can be empirically determined, as it generally depends on the type of seed that is introduced into the mixer unit 1. The predetermined temperature to which the seeds are heated may, depending on what technique is used, be adjusted by controlling the temperature and/or the amount of steam that is introduced in the step of adding liquid, and/or by adjusting the temperature and flow rate of a heating media that flows through the heating jacket 21.

The seeds inside the mixer unit 1 are mixed 110 into a paste to thereby obtain the paste-like food product. This mixing 110 can be initiated simultaneous with the providing of the seeds into the mixer unit 1, when adding 106 the liquid or after the liquid has been added.

Optionally, since many types of paste-like food product are made of several ingredients, additional food ingredients 13 are added 112 to the seeds. The additional ingredients 13 are mixed 114 with the seeds to thereby obtain the paste-like food product. This mixing step 114 may be a mixing sequence that is part of the mixing 110 of the seeds into the paste. The additional ingredients 13 may be added simultaneous with the seeds in step 104, with the liquid in step 106 or at a later stage, for example when the seeds already have been mixed with the liquid to such an extent that a paste is formed.

In one embodiment the mixing 110 is started before the adding 106 of liquid and the heating 108 has fully softened the seeds. The mixing 110 may then be seen as including several steps, where a first step is mixing the seeds into pieces 1101, before the seeds are fully soft. By virtue of their relatively smaller size the pieces absorb liquid and heat much faster than seeds of the same type that are not mixed to pieces. Thus, the mixing 110 allows the pieces to soften 1102 much faster than seeds that are soaked and boiled the traditional way. The soft pieces are then mixed into a paste 1103 in a very fast and efficient way.

In one embodiment the mixing 110 of the seeds comprises running the mixer unit 1 at a first operational speed so that the seeds are mixed into a paste. Thereafter the mixing 114 of the seeds, which now have the form of a paste, comprises running the mixer unit 1 at a second operational speed to thereby obtain the paste-like food product. The mixing at the second operational speed may be initiated when any further ingredients 13 are added 112 into the mixer unit 1. The second operational speed is higher than the first operational speed, so that a higher shear is provided by the mixer unit 1 when running the mixer unit 1 at the second operational speed, as compared to running it at the first operational speed. In this context, shear may be determined by using conventional principles for determining shear stress in non-Newtonian fluids.

An operational speed of the mixer unit 1 may be defined as the speed by which the rotor 51 of the mixer unit 1 rotates. The first operational speed may provide a peripheral speed of the rotor 51 in the range of 3-15 m/s, and the second operational speed may provide a peripheral speed of the rotor 51 that is larger than 15 m/s and up to 30 m/s. The peripheral speed of the rotor 51 may be calculated as the tangential speed of an outermost part (the part most distant from axis A2) of the rotor 51.

As indicated, the seeds are of a type that needs to be softened by heating as well as mixed to form the paste-like food product, such as beans and peas. Other examples of seeds have been mentioned in the Background.

An advantage with the method is that the seeds 11 may be dry, i.e. un-soaked, when provided 104 into the mixer unit 1. Dry seeds may defined as the state of the seeds as delivered by a farmer that produces the seeds, where the storage life of the delivered beans is more than one year. Dry seeds that have been washed prior to being provided into the mixer unit 1 are still considered dry seeds, even though the seeds then may be wet on the outside.

Even though the seeds are dry they naturally contain some amount of water, which can vary depending on e.g. the type of seed, how long the seeds have been stored and the humidity of the seeds' surroundings. However, in any case the dry seeds typically comprise less than 30 wt% water, less than 25 wt% water, or less than 18 wt% water, when provided 104 into the mixer unit mixer unit 1 and when the mixing 110 is initiated. Only water that is part of the seed itself, i.e. located inside the seed, is taken into account when determining how much water the seed comprises. Water on the outside of the seed is not comprised in its water content. Dry seeds (e.g. beans and chickpeas) are significantly different from soaked ones which contains much more water. Washed, dry seeds like chickpeas and beans may have a water content that is slightly higher than dry beans, depending on how long time the washing took, but the content is less than 30 wt% when mixed 110 as described herein.
wt% means percentage by weight. For example, 30 wt% water means that 30% of the weight of the seed constitutes water. The water content of the seeds may of course be less than 30 wt% when provided into the mixer unit 1 and when the mixing 110 is initiated, such as less than 18 wt%, or less than 14 wt%.

The seeds may be shortly pre-soaked so as to shorten the time duration of the mixing. However, soaking adds to total production time. To maintain a reasonable production time the soaking time may be limited so that the seeds' water content does not exceed 30 wt%.

In one embodiment of the method the seeds 11 are pre-soaked before the mixing 110 is initiated. The soaking may be done in the mixer unit 1 or in a separate vessel. In any case, the seeds may then be soaked for less than 1 hour. Alternatively, The seeds may be soaked less than 2 hours, less than 1,5 hours, less than 45 minutes, less than 30 minutes or less than 15 minutes.

The method is advantageous in that, when the seeds are mixed prior to their softening 1102, all seeds have a relatively uniform size and are thus equally softened by the liquid and the heat. This allows use of seeds that have a greater variance in their sizes. Moreover, beans of different types that due to their respective size have different cooking times may be efficiently mixed and cooked together.

In one embodiment the mixing 110 of the seeds comprises mixing 1101 the seeds into pieces that have an average size that is less than 2 mm. This applies for seeds that before the mixing 110 have an average size that is larger than 2 mm. The pieces are in one embodiment still dry when mixed to the size of 2 mm, i.e. they have a water content as described above (less than 30 wt%, less than 25 wt%, less than 18 wt% or less than 14 wt%). However, due to their small size they are quickly heated and softened. The average size of the particles may be determined as the mean maximal length of the particles, or, when the particles have a generally spherical shape, as the mean diameter of the particles. Generally, the mixing 110 of the seeds comprises mixing 1101 the seeds into pieces, before the heating 108 has fully softened the seeds, which assures a very fast process.

The mixing unit 1 and the a control unit 60 are operable to perform the described method for processing seeds into a paste-like food product. All the described parts and features of the mixer 1 contribute to efficiently allowing the method to be performed by using only one, single mixer unit.

## Claims

1. A method for processing seeds (11) into a paste-like food product by using one single mixer unit (1), the method comprising
providing (104) the seeds (11) into the mixer unit (1),
adding (106) liquid (12) to the seeds (11),
heating (108) the seeds (11) to thereby soften the seeds (11), and
mixing (110) the seeds (11) into a paste to thereby obtain the paste-like food product, **characterized in that**
the seeds (11) comprise less than 30 wt% water when provided (104) into the mixer unit (1), and
the added (106) liquid (12) has a temperature of at least 60 °C, such that the heating (108) is least partially provided by the added liquid (12).

2. The method according to claim 1, comprising
adding (112) food ingredients to the seeds, and
mixing (114) the food ingredients with the seeds to thereby obtain the paste-like food product.

3. The method according to any one of the preceding claims, wherein
the mixing (110) of the seeds (11) comprises running the mixer unit (1) at a first operational speed so that the seeds (11) are mixed into a paste,
the mixing (114) of the seeds (11) comprises, after the seeds (11) are mixed into a paste, running the mixer unit (1) at a second operational speed to thereby obtain the paste-like food product, and
the second operational speed is higher than the first operational speed, so that a higher shear is provided by the mixer unit (1) when running the mixer unit (1) at the second operational speed as compared to running the mixer unit (1) at the first operational speed.

4. The method according to any one of the preceding claims, wherein the seeds (11) are beans or peas.

5. The method according to any one of the preceding claims, wherein the seeds (11) are dry when provided (104) into the mixer unit (1).

6. The method according to any one of claims 1-4, wherein the seeds (11) have been soaked less than 1 hour, when provided (104) into the mixer unit (1).

7. The method according to any one of the preceding claims, wherein the heating (108) comprises heating the seeds (11) to a temperature within the range of 60 to 120 °C.

8. The method according to claim 7, wherein the heating (108) comprises holding the seeds (11) within the temperature range of 60 to 120 °C for less than 20 minutes.

9. The method according to any one of the preceding claims, wherein the heating (108) comprises any of
injecting steam into the mixer unit (1), and
applying heat by a heating jacket (21) of the mixer unit (1).

10. The method according to any one of the preceding claims, wherein the heating (108) comprises heating the mixed seeds until toxic, lectin-type substances are removed to such an extent that the paste-like food product is safe for consumption by humans.

11. The method according to any one of the preceding claims, wherein the mixing (110) of the seeds (11) comprises mixing (1101) the seeds into pieces that have an average size that is less than 2 mm.

12. The method according to any one of the preceding claims, wherein the mixing (110) of the seeds (11) comprises mixing (1101) the seeds into pieces, before the heating (108) has fully softened the seeds (11).

13. The method according to any one of the preceding claims, wherein the adding (106) of liquid (12) to the seeds (11) comprises adding liquid of a weight that is at least 20% of the weight of the provided (104) seeds (11).

## Patentansprüche

1. Verfahren zum Verarbeiten von Samenkörnern (11) in ein pastenartiges Lebensmittelprodukt, indem eine einzige Mischeinheit (1) verwendet wird, wobei das Verfahren umfasst:
Bereitstellen (104) der Samenkörner (11) in der Mischeinheit (1),
Hinzufügen (106) einer Flüssigkeit (12) zu den Samenkörnern (11),
Erwärmen (108) der Samenkörner (11), um dadurch die Samenkörner (11) aufzuweichen, und
Mischen (110) der Samenkörner (11) in eine Paste, um dadurch das pastenartige Lebensmittelprodukt zu erhalten, **dadurch gekennzeichnet, dass**
die Samenkörner (11) weniger als 30 Gew.-% Wasser umfassen, wenn sie in der Mischeinheit (1) bereitgestellt werden (104), und
dass die hinzugefügte (106) Flüssigkeit (12) eine Temperatur von mindestens 60°C aufweist, sodass das Erwärmen (108) mindestens teilweise durch die hinzugefügte Flüssigkeit (12) bereitgestellt wird.

2. Verfahren nach Anspruch 1, umfassend:
Hinzufügen (112) von Lebensmittelzutaten zu den Samenkörnern und
Mischen (114) der Lebensmittelzutaten mit den Samenkörnern, um dadurch das pastenartige Lebensmittelprodukt zu erhalten.

3. Verfahren nach einem der vorhergehenden Ansprüche, wobei:
das Mischen (110) der Samenkörner (11) ein Betreiben der Mischeinheit (1) mit einer ersten Betriebsdrehzahl umfasst, sodass die Samenkörner (11) in eine Paste gemischt werden,
das Mischen (114) der Samenkörner (11), nach dem Mischen der Samenkörner (11) in eine Paste, ein Betreiben der Mischeinheit (1) mit einer zweiten Betriebsdrehzahl umfasst, um dadurch das pastenartige Lebensmittelprodukt zu erhalten, und,
die zweite Betriebsdrehzahl größer als die erste Betriebsdrehzahl ist, sodass, wenn die Mischeinheit (1) mit der zweiten Betriebsdrehzahl betrieben wird, eine größere Scherkraft von der Mischeinheit (1) im Vergleich dazu bereitgestellt wird, wenn die Mischeinheit (1) mit der ersten Betriebsdrehzahl betrieben wird.

4. Verfahren nach einem der vorhergehenden Ansprüche, wobei die Samenkörner (11) Bohnen oder Erbsen sind.

5. Verfahren nach einem der vorhergehenden Ansprüche, wobei die Samenkörner (11) trocken sind, wenn sie in der Mischeinheit (1) bereitgestellt werden (104).

6. Verfahren nach einem der Ansprüche 1 bis 4, wobei die Samenkörner (11) weniger als 1 Stunde eingeweicht wurden, wenn sie in der Mischeinheit (1) bereitgestellt werden (104).

7. Verfahren nach einem der vorhergehenden Ansprüche, wobei das Erwärmen (108) ein Erwärmen der Samen (11) auf eine Temperatur innerhalb des Bereichs von 60 bis 120°C umfasst.

8. Verfahren nach Anspruch 7, wobei das Erwärmen (108) ein Halten der Samenkörner (11) für weniger als 20 Minuten innerhalb des Temperaturbereichs von 60 bis 120°C umfasst.

9. Verfahren nach einem der vorhergehenden Ansprüche, wobei das Erwärmen (108) einen der folgenden Schritte umfasst:
Einspritzen von Dampf in die Mischeinheit (1) und
Anlegen einer Wärme mithilfe eines Heizmantels (21) der Mischeinheit (1).

10. Verfahren nach einem der vorhergehenden Ansprüche, wobei das Erwärmen (108) ein Erwärmen der gemischten Samenkörner bis toxische lektinartige Substanzen in einem Maße entfernt wurden, dass das pastenartige Lebensmittelprodukt für einen menschlichen Verzehr sicher ist.

11. Verfahren nach einem der vorhergehenden Ansprüche, wobei das Mischen (110) der Samenkörner (11) ein Mischen (1101) der Samenkörner in Bestandteile umfasst, die eine Durchschnittsgröße von weniger als 2 mm aufweisen.

12. Verfahren nach einem der vorhergehenden Ansprüche, wobei das Mischen (110) der Samenkörner (11) ein Mischen (1101) der Samenkörner in Bestandteile umfasst, bevor das Erwärmen (108) die Samenkörner (11) vollständig aufgeweicht hat.

13. Verfahren nach einem der vorhergehenden Ansprüche, wobei das Hinzufügen (106) von Flüssigkeit (12) zu den Samenkörnern (11) ein Hinzufügen von Flüssigkeit mit einem Gewicht umfasst, das mindestens 20 % des Gewichts der bereitgestellten (104) Samenkörner (11) beträgt.

## Revendications

1. Procédé de transformation de graines (11) en un produit alimentaire en forme de pâte au moyen d'une seule unité de malaxage (1), le procédé comprenant
l'introduction (104) des graines (11) dans l'unité de malaxage (1),
l'ajout (106) de liquide (12) aux graines (11),
le chauffage (108) des graines (11) pour ramollir ainsi les graines (11), et
le malaxage (110) des graines (11) en une pâte pour obtenir ainsi le produit alimentaire en forme de pâte, **caractérisé en ce que**
les graines (11) comprennent moins de 30 % en poids d'eau lorsqu'elles sont introduites (104) dans l'unité de malaxage (1), et
le liquide (12) ajouté (106) a une température d'au moins 60 °C, de telle sorte que le chauffage (108) est au moins partiellement assuré par le liquide ajouté (12).

2. Procédé selon la revendication 1, comprenant
l'ajout (112) d'ingrédients alimentaires aux graines, et
le malaxage (114) des ingrédients alimentaires avec les graines pour obtenir ainsi le produit alimentaire en forme de pâte.

3. Procédé selon l'une quelconque des revendications précédentes, dans lequel
le malaxage (110) des graines (11) comprend le fonctionnement de l'unité de malaxage (1) à une première vitesse de fonctionnement de telle sorte que les graines (11) sont malaxées en une pâte,
le malaxage (114) des graines (11) comprend, après que les graines (11) ont été malaxées en une pâte, le fonctionnement de l'unité de malaxage (1) à une deuxième vitesse de fonctionnement pour obtenir ainsi le produit alimentaire en forme de pâte, et
la deuxième vitesse de fonctionnement est supérieure à la première vitesse de fonctionnement, de telle sorte qu'un cisaillement plus important est appliqué par l'unité de malaxage (1) lors du fonctionnement de l'unité de malaxage (1) à la deuxième vitesse de fonctionnement par rapport au fonctionnement de l'unité de malaxage (1) à la première vitesse de fonctionnement.

4. Procédé selon l'une quelconque des revendications précédentes, dans lequel les graines (11) sont des haricots ou des pois.

5. Procédé selon l'une quelconque des revendications précédentes, dans lequel les graines (11) sont sèches lorsqu'elles sont introduites (104) dans l'unité de malaxage (1).

6. Procédé selon l'une quelconque des revendications 1 à 4, dans lequel les graines (11) ont été trempées moins d'une heure, lorsqu'elles sont introduites (104) dans l'unité de malaxage (1).

7. Procédé selon l'une quelconque des revendications précédentes, dans lequel le chauffage (108) comprend le chauffage des graines (11) jusqu'à une température dans la gamme de 60 à 120 °C.

8. Procédé selon la revendication 7, dans lequel le chauffage (108) comprend le maintien des graines (11) dans la gamme de températures de 60 à 120 °C pendant moins de 20 minutes.

9. Procédé selon l'une quelconque des revendications précédentes, dans lequel le chauffage (108) comprend une quelconque opération parmi
l'injection de vapeur d'eau dans l'unité de malaxage (1), et
l'application de chaleur par une enveloppe chauffante (21) de l'unité de malaxage (1).

10. Procédé selon l'une quelconque des revendications précédentes, dans lequel le chauffage (108) comprend le chauffage des graines malaxées jusqu'à ce que des substances toxiques de type lectine soient retirées jusqu'à un degré tel que le produit alimentaire en forme de pâte est sans danger pour la consommation humaine.

11. Procédé selon l'une quelconque des revendications précédentes, dans lequel le malaxage (110) des graines (11) comprend le malaxage (1101) des graines en morceaux qui ont une taille moyenne qui est inférieure à 2 mm.

12. Procédé selon l'une quelconque des revendications précédentes, dans lequel le malaxage (110) des graines (11) comprend le malaxage (1101) des graines en morceaux, avant que le chauffage (108) ait entièrement ramolli les graines (11).

13. Procédé selon l'une quelconque des revendications précédentes, dans lequel l'ajout (106) de liquide (12) aux graines (11) comprend l'ajout de liquide d'un poids qui représente au moins 20 % du poids des graines (11) introduites (104).
